(19) Europäisches Patentamt
European Patent Office
Office européen des brevets

(11) **EP 3 225 653 A1**

(12) **EUROPEAN PATENT APPLICATION**
published in accordance with Art. 153(4) EPC

(43) Date of publication:
04.10.2017 Bulletin 2017/40

(21) Application number: 15863657.1

(22) Date of filing: 26.11.2015

(51) Int Cl.:
*C08J 9/06* (2006.01)   *B29C 47/00* (2006.01)
*B32B 5/18* (2006.01)   *C08L 101/00* (2006.01)
*B29K 105/04* (2006.01)   *B29L 7/00* (2006.01)

(86) International application number:
**PCT/JP2015/083207**

(87) International publication number:
**WO 2016/084889 (02.06.2016 Gazette 2016/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 28.11.2014  JP 2014241453
24.03.2015  JP 2015060521
10.08.2015  JP 2015157959

(71) Applicant: **Sumitomo Chemical Company, Ltd.**
**Chuo-ku**
**Tokyo 104-8260 (JP)**

(72) Inventor: **CHIBA, Shunsuke**
**Ichihara-shi**
**Chiba 299-0195 (JP)**

(74) Representative: **Vossius & Partner**
**Patentanwälte Rechtsanwälte mbB**
**Siebertstrasse 3**
**81675 München (DE)**

(54) **THERMOPLASTIC RESIN COMPOSITION MOLDED ARTICLE**

(57) Provided are a molded article formed of a thermoplastic resin composition, wherein a maximum height (Rmax) of surface roughness of the molded article measured in accordance with JIS B 0601-1982 and a centerline average roughness (Ra) of a surface of the molded article measured in accordance with JIS B 0601-1982 satisfy a formula: $9 \leq Rmax/(Ra + 1) \leq 45$, an area ratio of through-holes of the molded article is 1 % or more and 20% or less, with a surface area of the molded article being 100%, and a bulk density of the molded article is 0.13 g/cm$^3$ or more and 0.50 g/cm$^3$ or less; a method for producing the molded article; and a laminate having the molded article.

EP 3 225 653 A1

**Description**

**Technical Field**

The present invention relates to a molded article formed of a thermoplastic resin composition.

**Background Art**

Ornamental characteristics are required of interior products such as table covers, lamp shades, lighting covers, partitions, sliding-screen (shoji) paper, and sliding doors (fusuma), and a Japanese paper and a synthetic resin film are used in these components.

For example, an ornamental synthetic resin sheet obtained by laminating a Japanese paper and a synthetic resin film is proposed in Patent Literature 1. In Patent Literature 2 is described a high-gloss resin film produced by melt-extruding and stretching a resin composition containing a propylene resin and a foaming agent, and, in Patent Literature 3 is described a pearlescent resin film produced by melt-extruding and stretching a resin composition containing a propylene resin, low density polyethylene, and a foaming agent. In Patent Literature 4 is described a foamed sheet having excellent surface smoothness which is obtained by melt-extruding a resin composition containing a propylene resin, low density polyethylene, and a foaming agent.

**Citation List**

**Patent Literature**

Patent Literature 1: Japanese Unexamined Patent Publication No. 2003-25514
Patent Literature 2: Japanese Unexamined Patent Publication No. 2002-524299
Patent Literature 3: Japanese Unexamined Patent Publication No. 2007-231192
Patent Literature 4: Japanese Unexamined Patent Publication No. H9-235403

**Summary of Invention**

**Technical Problem**

However, the above films and sheet prepared from resin compositions containing a thermoplastic resin and a foaming agent lack a Japanese-style texture and, also, the above ornamental synthetic resin sheet in which a Japanese paper is used as a component is not one that is applicable to Western-style designs while having a Japanese-style texture, that gives a modem-looking impression to observers, and that has a Japanese-modem texture as a whole.

Under this circumstance, an object of the present invention is to provide a molded article formed of a thermoplastic resin composition and having a Japanese-modem texture.

**Solution to Problem**

According to the present invention, the following molded article, laminate having the molded article, and method for producing the molded article are provided.

[1] A molded article formed of a thermoplastic resin composition, wherein
a maximum height (Rmax) of surface roughness of the molded article measured in accordance with JIS B 0601-1982 and a centerline average roughness (Ra) of a surface of the molded article measured in accordance with JIS B 0601-1982 satisfy the following formula (1):

$$9 \leq \mathrm{Rmax}/(\mathrm{Ra} + 1) \leq 45 \qquad \text{Formula (1),}$$

an area ratio of through-holes of the molded article is 1% or more and 20% or less, with a surface area of the molded article being 100%, and
a bulk density of the molded article is 0.13 g/cm$^3$ or more and 0.50 g/cm$^3$ or less.

[2] The molded article according to [1], wherein the thermoplastic resin composition comprises two immiscible thermoplastic resins, and the total amount of the two immiscible thermoplastic resins is 90% by weight or more, with the overall amount of all thermoplastic resins in the thermoplastic resin composition being 100% by weight.

[3] The molded article according to [2], wherein the two immiscible thermoplastic resins are two immiscible thermoplastic resins differing in transition temperature.

[4] The molded article according to [3], wherein

of the two immiscible thermoplastic resins differing in transition temperature, a first thermoplastic resin (A) being the resin with a higher transition temperature and a second thermoplastic resin (B) being the resin with a lower transition temperature have a difference in transition temperature of 10°C or more and 50°C or less, and

the content of the first thermoplastic resin (A) is 30% by weight or more and 90% by weight or less and the content of the second thermoplastic resin (B) is 10% by weight or more and 70% by weight or less, with the total amount of the first thermoplastic resin (A) and the second thermoplastic resin (B) being 100% by weight.

[5] The molded article according to any one of [1] to [4], the molded article being a film having a thickness of 10 $\mu$m or more and 1000 $\mu$m or less.

[6] A laminate having a layer formed of the molded article according to any one of [1] to [5] as at least one surface layer.

[7] A method for producing the molded article according to any one of [1] to [5], comprising:

a foamed sheet preparation step of melt-extruding a thermoplastic resin composition comprising a foaming agent to prepare a foamed sheet; and

a stretching step of biaxially stretching the foamed sheet obtained in the foamed sheet preparation step.

**Advantageous Effects of Invention**

The present invention can provide a molded article formed of a thermoplastic resin composition and having a Japanese-modern texture.

**Description of Embodiments**

The molded article of the present invention is formed of a thermoplastic resin composition, and the maximum height (Rmax) of the surface roughness of the molded article measured in accordance with JIS B 0601-1982 and the centerline average roughness (Ra) of the surface of the molded article measured in accordance with JIS B 0601-1982 satisfy the following formula (1):

$$9 \le \mathrm{Rmax}/(\mathrm{Ra} + 1) \le 45 \qquad \text{Formula (1)}$$

The area ratio of through-holes in the molded article of the present invention is 1% or more and 20% or less. The through-holes are holes penetrating the molded article in the thickness direction. The area ratio of through-holes is the proportion of the area occupied by the openings of through-holes on the surface of the molded article, with the surface area of the molded article being 100%, i.e., the proportion of the area of through-hole portions to the surface area of the molded article being 100%, and can be determined by performing an image analysis on a surface image of the molded article. Specifically, the area ratio of through-holes can be determined by analyzing with image analysis software an image obtained by using an image analyzer. The area ratio of through-holes is, from the viewpoint of enhancing the texture of the molded article, preferably 3% or more and 15% or less.

The bulk density of the molded article of the present invention is 0.13 g/cm³ or more and 0.50 g/cm³ or less. The bulk density is the ratio of the weight to the outer-size volume of the molded article, i.e., a value obtained by dividing the weight by the volume calculated from the outer size of the molded article. The bulk density of the molded article decreases with an increase in, for example, the area ratio of through-holes of the molded article, irregularities of the molded-article surface, and closed cells inside the molded article. The bulk density is, from the viewpoint of enhancing the texture of the molded article, preferably 0.15 g/cm³ or more and 0.40 g/cm³ or less.

The molded article of the present invention is preferably a film or a sheet, and more preferably a film. When the molded article of the present invention is a film, the thickness of the film is preferably 10 $\mu$m or more and 1000 $\mu$m or less, and more preferably 30 $\mu$m or more and 500 $\mu$m or less.

A preferable method for producing the molded article of the present invention is a method including a foamed sheet preparation step of preparing a foamed sheet by melt-extruding a thermoplastic resin composition containing a foaming agent, and a stretching step of biaxially stretching the foamed sheet obtained in the foamed sheet preparation step. It is preferable for the thermoplastic resin composition to contain two or more immiscible thermoplastic resins. By biaxially stretching the foamed sheet, cells of the foamed sheet break, and some broken cells connect to form holes that penetrate in the thickness direction (through-holes). When cells break in the vicinity of the surface of the foamed sheet, depressions are formed in the surface of the foamed sheet. As the through-holes and the depressions are formed, for example, resins bulge along the peripheral edges of the through-holes and the depressions, and projections where the resins are densely gathered are formed. Portions where the projections appear connected have an appearance almost like fibers in a Japanese paper, and create a Japanese-modem texture. The maximum height (Rmax) of the surface roughness of the molded article having irregularities thus formed is influenced mainly by densely gathered projections that appear like fibers in a Japanese paper, and the irregularities of the molded article having a Japanese-modem texture satisfy the above formula (1). When the thermoplastic resin composition contains two or more immiscible thermoplastic resins differing in transition temperature, the immiscible thermoplastic resins in the foamed sheet prepared by the above method are phase-separated, and unevenness in thickness, appearance, cells, etc. is likely to occur, and when such a foamed sheet is stretched, uneven stretching occurs during stretching that, among the thermoplastic resins phase-separated in the foamed sheet, portions composed of a resin with a lower transition temperature are more preferentially stretched during stretching than portions composed of a resin with a higher transition temperature, and the portions composed of a resin with a higher transition temperature are unlikely to be stretched, so that irregularities and through-holes are more likely to be formed in the surface of the molded article.

Examples of the thermoplastic resins include an olefin resin, a styrene resin, a methacrylic resin, an acrylic resin, an ester resin, and an amide resin, and preferably an olefin resin and a styrene resin.

The olefin resin is a resin containing 50% by weight or more of a structural unit derived from an olefin having 2 or more and 10 or less carbon atoms, with the total amount of the olefin resin being 100% by weight. Examples of the olefin having 2 or more and 10 or less carbon atoms include ethylene, propylene, 1-butene, 4-methyl-1-pentene, 1-hexene, 1-octene, and 1-decene.

The olefin resin may contain a structural unit derived from a monomer other than the olefin having 2 or more and 10 or less carbon atoms. Examples of the monomer other than the olefin having 2 or more and 10 or less carbon atoms include aromatic vinyl monomers such as styrene; unsaturated carboxylic acids such as acrylic acid and methacrylic acid; unsaturated carboxylic acid esters such as methyl acrylate, ethyl acrylate, butyl acrylate, methyl methacrylate, and ethyl methacrylate; vinyl ester compounds such as vinyl acetate; conjugated dienes such as 1,3-butadiene and 2-methyl-1,3-butadiene (isoprene); and nonconjugated dienes such as dicyclopentadiene and 5-ethylidene-2-norbornene.

It is preferable that the olefin resin be an ethylene resin, a propylene resin, or a butene resin.

The ethylene resin is a resin containing 50% by weight or more of a structural unit derived from ethylene, and examples thereof include an ethylene homopolymer, an ethylene-1-butene copolymer, an ethylene-1-hexene copolymer, an ethylene-1-octene copolymer, and an ethylene-1-butene-1-hexene copolymer. Two or more ethylene resins may be used.

The propylene resin is a resin containing 50% by weight or more of a structural unit derived from propylene, and examples thereof include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer. Two or more propylene resins may be used.

The butene resin is a resin containing 50% by weight or more of a structural unit derived from 1-butene, and examples thereof include a 1-butene homopolymer, a 1-butene-ethylene copolymer, a 1-butene-propylene copolymer, a 1-butene-1-hexene copolymer, a 1-butene-1-octene copolymer, a 1-butene-ethylene-propylene copolymer, a 1-butene-ethylene-1-hexene copolymer, a 1-butene-ethylene-1-octene copolymer, a 1-butene-propylene-1-hexene copolymer, and a 1-butene-propylene-1-octene copolymer. Two or more butene resins may be used.

The styrene resin is a resin containing 50% by weight or more of a structural unit derived from styrene or a styrene derivative. Examples of the styrene derivative include p-methylstyrene, p-tert-butylstyrene, $\alpha$-methylstyrene, and p-methoxystyrene. The styrene resin may contain a structural unit derived from a monomer other than styrene and a styrene derivative, and examples thereof include olefins having 2 or more and 10 or less carbon atoms; unsaturated carboxylic acids such as acrylic acid and methacrylic acid; unsaturated carboxylic acid esters such as methyl acrylate, ethyl acrylate, butyl acrylate, methyl methacrylate, and ethyl methacrylate; vinyl ester compounds such as vinyl acetate; conjugated dienes such as 1,3-butadiene and 2-methyl-1,3-butadiene (isoprene); and nonconjugated dienes such as dicyclopentadiene and 5-ethylidene-2-norbornene.

The methacrylic resin is a resin containing 50% by weight or more of a structural unit derived from a methacrylic acid ester, and examples thereof include poly(methyl methacrylate), poly(ethyl methacrylate), poly(butyl methacrylate), and poly(2-ethylhexyl methacrylate).

The acrylic resin is a resin containing 50% by weight or more of a structural unit derived from an acrylic acid ester, and examples thereof include poly(methyl acrylate), poly(ethyl acrylate), poly(butyl acrylate), and poly(2-ethylhexyl acrylate).

The ester resin is a resin containing 50% by weight or more of a structural unit derived from an ester of a polycarboxylic acid and a polyalcohol, and examples thereof include polyethylene terephthalate, polyethylene naphthalate, polybutylene terephthalate, and polybutylene naphthalate.

The amide resin is a resin containing 50% by weight or more of a structural unit repeated with an amide bond, and examples thereof include poly($\varepsilon$-caprolactam), polydodecanamide, poly(hexamethylene adipamide), poly(hexamethylene dodecanamide), poly(p-phenylene terephthalamide), and poly(m-phenylene terephthalamide).

As a method for producing the above thermoplastic resins, a known polymerization method is used in which a known polymerization catalyst is used.

When the thermoplastic resin composition contains two immiscible thermoplastic resins, it is preferable that the total amount of the two immiscible thermoplastic resins be 90% by weight or more, with the overall amount of all thermoplastic resins in the thermoplastic resin composition being 100% by weight. When the thermoplastic resin composition contains two immiscible thermoplastic resins, examples of combinations of two immiscible thermoplastic resins include combinations of an olefin resin and another olefin resin, an olefin resin and a styrene resin, an olefin resin and a methacrylic resin, an olefin resin and an acrylic resin, an olefin resin and an ester resin, and an olefin resin and an amide resin, preferably an olefin resin and another olefin resin, and an olefin resin and a styrene resin, and more preferably a propylene resin and an ethylene resin, and a propylene resin and a styrene resin. When the thermoplastic resin composition contains two immiscible thermoplastic resins and further contains a thermoplastic resin different from the two immiscible thermoplastic resins, the further thermoplastic resin may be miscible with one of the two immiscible thermoplastic resins, or may be immiscible with any of the two immiscible thermoplastic resins.

It is preferable that two immiscible thermoplastic resins differing in transition temperature be contained in the thermoplastic resin composition used in the production of the molded article of the present invention. When, of the two immiscible thermoplastic resins, the thermoplastic resin with a higher transition temperature is named a first thermoplastic resin (A) and the thermoplastic resin with a lower transition temperature is named a second thermoplastic resin (B), it is preferable that the content of the first thermoplastic resin (A) be 30% by weight or more and 90% by weight or less and the content of the second thermoplastic resin (B) be 10% by weight or more and 70% by weight or less in the thermoplastic resin composition, with the total amount of the first thermoplastic resin (A) and the second thermoplastic resin (B) in the thermoplastic resin composition being 100% by weight, and the total amount of the first thermoplastic resin (A) and the second thermoplastic resin (B) in the thermoplastic resin composition be 90% by weight or more, with the overall amount of all thermoplastic resins in the thermoplastic resin composition being 100% by weight. Herein, the transition temperature is the melting peak temperature of a resin when the resin is a crystalline thermoplastic resin or is the glass transition temperature of a resin when the resin is an amorphous thermoplastic resin, and both can be obtained by differential scanning calorimetry. It is preferable that the difference between the transition temperatures of the first thermoplastic resin (A) and the second thermoplastic resin (B) be 10°C or more and 50°C or less.

It is more preferable that in the thermoplastic resin composition, the content of the first thermoplastic resin (A) be 40% by weight or more and 80% by weight or less, and the content of the second thermoplastic resin (B) be 20% by weight or more and 60% by weight or less, with the total amount of the first thermoplastic resin (A) and the second thermoplastic resin (B) in the thermoplastic resin composition being 100% by weight, and it is further preferable that the content of the first thermoplastic resin (A) is 50% by weight or more and 70% by weight or less, and the content of the second thermoplastic resin (B) is 30% by weight or more and 50% by weight or less. In order to increase the value of Rmax/(Ra + 1) of formula (1), it is preferable to increase the content of the second thermoplastic resin (B). As described above, during stretching, portions composed of the resin (B) with a lower transition temperature are more preferentially stretched than portions composed of the resin (A) with a higher transition temperature. By increasing the content of the second thermoplastic resin (B), portions that are likely to be stretched increase, such portions are more stretched and become thinner, portions composed of the first thermoplastic resin (A) remain not very stretched, and it is thus considered that Rmax increases, and the value of Rmax/(Ra + 1) increases.

The melt mass flow rate (MFR(A)) of the first thermoplastic resin (A) measured under conditions having a temperature of 230°C and a load of 2.16 kgf in accordance with JIS K 7210-1999 is preferably 1 g/10 min or more and 30 g/10 min or less.

It is preferable that the melt mass flow rate (MFR(A)) of the first thermoplastic resin (A) measured under conditions having a temperature of 230°C and a load of 2.16 kgf in accordance with JIS K 7210-1999 and the melt mass flow rate (MFR(B)) of the second thermoplastic resin (B) measured under conditions having a temperature of 230°C and a load of 2.16 kgf in accordance with JIS K 7210-1999 satisfy the following formula (2).

$$-0.5 \leq \log(\mathrm{MFR(A)}) - \log(\mathrm{MFR(B)}) \leq 0.5 \quad \text{Formula (2)}$$

It is preferable that the first thermoplastic resin (A) be a propylene resin. The melting peak temperature of the propylene resin is preferably 125°C or more and 140°C or less.

It is preferable that the second thermoplastic resin (B) be an ethylene resin or a styrene resin. The density of the ethylene resin and the styrene resin is preferably 0.860 g/cm$^3$ or more and 0.905 g/cm$^3$ or less. Herein, the density is measured by the immersion method (23°C) set forth in JIS K 7112-1990.

Examples of the foaming agent include known foaming agents such as chemical foaming agents and physical foaming agents. A chemical foaming agent and a physical foaming agent may be used in combination.

The chemical foaming agent may be an inorganic compound or may be an organic compound, and two or more may be used in combination.

Examples of the inorganic compound include carbonates such as ammonium carbonate; and hydrogencarbonates such as sodium hydrogencarbonate.

Examples of the organic compound include (a) organic acids or salts thereof: carboxylic acids such as citric acid, succinic acid, adipic acid, tartaric acid, and benzoic acid, and salts thereof; (b) N-nitroso compounds: N,N'-dinitrosoterephthalamide and N,N'-dinitrosopentamethylenetetramine; (c) azo compounds: azodicarbonamide, azobisisobutyronitrile, azocyclohexylnitrile, azodiaminobenzene, and barium azodicarboxylate; (d) sulfonyl hydrazide compounds: benzenesulfonyl hydrazide, toluenesulfonyl hydrazide, p,p'-oxybis(benzenesulfenyl hydrazide), diphenylsulfone-3,3'-disulfonyl hydrazide; and (e) azide compounds: calcium azide, 4,4'-diphenyldisulfonyl azide, and p-toluenesulfonyl azide.

Examples of the physical foaming agent include inert gases such as nitrogen and carbon dioxide, and volatile organic compounds. It is preferable that the physical foaming agent be supercritical carbon dioxide, nitrogen, or a mixture thereof. Two or more physical foaming agents may be used in combination.

It is preferable that the foaming agent be a chemical foaming agent, and more preferably an organic acid or a salt thereof, or a mixture of an organic acid or a salt thereof with a hydrogencarbonate.

The content of the foaming agent in the thermoplastic resin composition used in the production of the molded article of the present invention is preferably 0.1 parts by weight or more and 3 parts by weight or less per 100 parts by weight of the overall amount of all thermoplastic resins.

In order to increase the area ratio of through-holes of the molded article, it is preferable to increase the content of the foaming agent. Increasing the content of the foaming agent results in more cells in the foamed sheet prepared by melt-extruding the resin composition. By stretching the foamed sheet having more cells, cells of the foamed sheet are likely to break, connect, and become through-holes, and it is thus considered that the area ratio of through-holes increases. Also, in order to increase the value of Rmax/(Ra + 1) of formula (1), it is preferable to increase the content of the foaming agent. A foamed sheet having more cells also has more cells in the vicinity of the surface, and by stretching such a foamed sheet, cells are likely to break in the vicinity of the surface of the foamed sheet, and the surface becomes more roughened. In this case, while both Rmax and Ra increase, Ra is considered to increase more.

When a chemical foaming agent is added as a foaming agent, the chemical foaming agent may be added as-is to the thermoplastic resins, or a masterbatch of the chemical foaming agent, the base resin of which is a thermoplastic resin, may be added to the thermoplastic resins. Preferably, the content of the chemical foaming agent in the masterbatch is 20% by weight or more and 80% by weight or less, with the total amount of the masterbatch being 100% by weight.

The thermoplastic resin composition used in the production of the molded article of the present invention may further contain an organic fiber, an inorganic filler, an organic polymer bead, or a further additive.

Examples of the organic fiber include polyester fiber, polyamide fiber, polyurethane fiber, polyimide fiber, polyolefin fiber, polyacrylonitrile fiber, and vegetable fiber of kenaf or the like, and polyester fiber is preferable.

When the organic fiber is contained, the content of the organic fiber is preferably 1 part by weight or more and 30 parts by weight or less per 100 parts by weight of the overall amount of the thermoplastic resins.

Examples of the inorganic filler include powdery, flaky, or granular inorganic fillers, and fibrous inorganic fillers.

Examples of the powdery, flaky, or granular inorganic fillers include talc, mica, calcium carbonate, barium sulfate, magnesium carbonate, clay, alumina, silica, calcium sulfate, silica sand, carbon black, titanium oxide, magnesium hydroxide, zeolite, molybdenum, diatomaceous earth, sericite, volcanic sand, calcium hydroxide, calcium sulfite, sodium sulfate, bentonite, and graphite.

Examples of the fibrous inorganic fillers include fibrous magnesium oxysulfate, potassium titanate fiber, magnesium hydroxide fiber, aluminum borate fiber, calcium silicate fiber, calcium carbonate fiber, carbon fiber, glass fiber, and metal fiber.

The inorganic fillers may be used singly or in combination of two or more.

The inorganic filler may have a surface that is treated with a coupling agent or a surfactant. Examples of the coupling agent include silane coupling agents and titanium coupling agents. Examples of the surfactant include higher fatty acids, higher fatty acid esters, higher fatty acid amides, and higher fatty acid salts.

The average particle size of the powdery, flaky, or granular inorganic filler is preferably 10 $\mu$m or less, and more preferably 5 $\mu$m or less.

The above average particle size is a 50% equivalent particle size (D50) determined from an integral distribution curve of an undersize method where particles are suspended in a dispersion medium such as water or alcohol and measured using a centrifugal sedimentation type particle size distribution analyzer.

The average fiber length of the fibrous inorganic filler is normally 3 µm or more and 20 µm or less. The average fiber diameter is preferably 0.2 µm or more and 1.5 µm or less. The aspect ratio is preferably 10 or more and 30 or less. The average fiber length and the average fiber diameter of the fibrous inorganic filler are those measured with an electron microscope, and the aspect ratio is the ratio of the average fiber length to the average fiber diameter (a value obtained by dividing the average fiber length by the average fiber diameter).

When the inorganic filler is contained, the content of the organic filler is preferably 0.1 part by weight or more and 30 parts by weight or less per 100 parts by weight of the overall amount of all thermoplastic resins.

Examples of the further additive include neutralizers, antioxidants, ultraviolet absorbers, light fastness agents, anti-weathering agents, lubricants, antistatic agents, anti-blocking agents, processing aids, pigments, foaming nucleating agents, plasticizers, flame retardants, crosslinking agents, crosslinking aids, luminance improvers, bactericidal agents, and light diffusing agents. These additives may be used singly or in combination of two or more. In the foamed sheet preparation step, while a higher fatty acid metal salt may be contained to prevent resin degradation products, etc. from adhering to a T die or a circular die, which will be described below, in order for the molded article to have a Japanese-modern texture, it is preferable that the content of the higher fatty acid metal salt be 50 parts by weight or less, and more preferably 25 parts by weight or less, with the content of the foaming agent used in the foamed sheet preparation step being 100 parts by weight.

In the foamed sheet preparation step in which a foamed sheet is prepared by melt-extruding the thermoplastic resin composition containing the foaming agent, specifically, it is preferable that the thermoplastic resin composition containing the foaming agent be melt-kneaded with a single screw extruder or a twin screw extruder, and the thermoplastic resin composition be melt-extruded from a T die or a circular die and foamed, and cooled-solidified with a chill roll into a sheet form.

It is preferable that the kneading temperature in the extruder be lower than the onset of degradation temperature of the foaming agent. The kneading temperature is more preferably a temperature at least 2°C lower than the onset of degradation temperature of the foaming agent, and even more preferably at least 5°C lower than the onset of degradation temperature of the foaming agent. It is preferable that the residence time of the thermoplastic resins in the extruder be 1 minute or more and 10 minutes or less.

It is preferable that the temperature of the thermoplastic resin composition at the time of melt extrusion from a T die or a circular die be higher than the onset of degradation temperature of the foaming agent. The temperature of the thermoplastic resin composition at the time of melt extrusion is more preferably a temperature at least 5°C higher than the onset of degradation temperature of the foaming agent, and even more preferably a temperature at least 10°C higher than the onset of degradation temperature of the foaming agent.

The rotational speed of the extruder is 20 rpm to 70 rpm. In order to increase the area ratio of through-holes of the molded article, it is preferable to reduce the rotational speed (the discharge rate) of the extruder. When the rotational speed (the discharge rate) of the extruder is reduced, the thickness of the resulting foamed sheet is relatively reduced. Also, when the rotational speed (the discharge rate) of the extruder is reduced, the resin pressure inside the extruder is reduced, cells derived from the foaming agent are likely to be enlarged, and the expansion ratio of the resulting foamed sheet tends to be increased. When such a foamed sheet is stretched, cells of the foamed sheet are likely to break, connect, and become through-holes, and it is thus considered that the area ratio of through-holes increases

The line speed at the time of cooling to solidify into a sheet form with a chill roll is 0.3 m/min to 1.2 m/min. In order to increase Rmax/(Ra + 1) of formula (1), it is preferable to increase the line speed at the time of cooling solidification into a sheet form with a chill roll. By increasing the line speed, the cooling rate at which the melt-extruded resin composition is cooled decreases. Accordingly, the phase separation of two immiscible resins is facilitated, the area of portions (domains) where the resin (B) with a low transition temperature is gathered in the foamed sheet increases, the area of portions that are likely to be stretched during stretching increases, such portions are more stretched and become thinner, portions composed of the resin (A) remain not very stretched, and it is thus considered that Rmax increases, and Rmax/(Ra + 1) increases.

Examples of the method for biaxially stretching the foamed sheet in the stretching step where the foamed sheet obtained in the foamed sheet preparation step is biaxially stretched include stretching techniques such as a sequential biaxial stretching technique, a simultaneous biaxial stretching technique, and a tubular biaxial stretching technique.

In the stretching step, it is preferable that the stretching temperature be $(T_X - 30)$°C or more and $(T_X + 10)$°C or less, where the transition temperature of a thermoplastic resin having the highest transition temperature among the thermoplastic resins contained in the thermoplastic resin composition is $T_X$ (unit: °C).

In the stretching step, the longitudinal stretch ratio is preferably 3 or more and 8 or less, and the transverse stretch ratio is preferably 3 or more and 8 or less. The ratio of the longitudinal stretch ratio to the transverse stretch ratio is preferably 0.77 or more and 1.3 or less. In order to increase the area ratio of through-holes of the molded article, it is preferable to increase the stretch ratio. By increasing the stretch ratio, the foamed sheet is more stretched during stretching, thus cells of the foamed sheet are likely to break, connect, and become through-holes, and it is considered that the area ratio of through-holes increases

The molded article of the present invention may be used as a laminate by being laminated with a further resin or material, and in such a case, the laminate has a layer formed of the molded article of the present invention as at least one surface layer. An example of the laminate is a laminate having a surface layer formed of the molded article of the present invention and a base material layer. In a laminate having a surface layer formed of the molded article of the present invention and a base material layer, the surface of the base material layer adjacent to the surface layer is visible through through-holes of the surface layer formed of the molded article of the present invention.

Examples of the method for producing a laminate having the molded article of the present invention as at least one surface layer include a method in which a thermoplastic resin composition containing a foaming agent is melt-extruded to prepare a foamed sheet, the resulting foamed sheet is laminated with a further resin and stretched by vacuum/pressure molding, press molding, or the like, and thus a three-dimensional shape is imparted while stretching the sheet, and a method in which the molded article of the present invention is inserted into a metal mold and adhered to a further resin by blow molding or the like. By preparing a foamed sheet having two or more layers formed of different resin compositions and biaxially stretching the foamed sheet, it is also possible to configure at least one surface layer of the foamed sheet to be a layer formed of the molded article of the present invention and the other layer to be a layer different from the layer formed of the molded article of the present invention.

The molded article and the laminate of the present invention can be used in applications of films for sliding-screen (shoji), bags, wrapping papers, lighting covers, ornamental films for doors such as sliding doors (fusuma), resin products such as bags and stationery, or the like.

Examples of the lighting covers include lamp shades such as covers for fluorescent lamps and incandescent lamps.

**Examples**

The present invention will be described below by way of Examples.

Measurement methods and evaluation methods for various physical property values are presented below.

(1) Area ratio of through-holes

An image of the surface of a film specimen having a length of 20 cm and a width of 20 cm was analyzed with an image analyzer to determine the area ratio (unit: %) of through-holes, with the area (400 cm$^2$) of the specimen being 100%.

The image analyzer was a Scanner GT-X970 manufactured by Seiko Epson Corporation, and the resulting image was analyzed with image analysis software ("A-Zo Kun" version 2.20 manufactured by Asahi Kasei Corporation) on a personal computer.

(2) Centerline average roughness (Ra) and maximum height (Rmax)

Rmax and Ra of a molded article were measured in accordance with JIS B 0601-1982. Specifically, using a three-dimensional surface roughness measuring instrument (SE-30KS manufactured by Kosaka Laboratory Ltd.), measurement was carried out 100 times at a rate of 0.5 mm/sec along a length of 2000 $\mu$m in the MD direction of a film and at a pitch of 10 $\mu$m in the TD direction of the film, and the resulting roughness curve was analyzed to determine Ra (unit in $\mu$m) and Rmax (unit in $\mu$m).

A diamond stylus having a stylus tip radius of 2 $\mu$m and a tip angle of 60° was used, the measuring tension was 0.7 mN, and the cutoff was 0.08 mm.

(3) Melting peak temperature (Tm), glass transition temperature (Tg)

Using a differential scanning calorimeter (MDSC manufactured by TA Instruments), a 10 mg sample was heat-treated at 220°C for 5 min in a nitrogen atmosphere, then cooled to -80°C at a cooling rate of 5°C/min, and maintained at -80°C for 1 min. Next, heating was performed at a heating rate of 5°C/min from -80°C to 180°C to measure a DSC curve, the peak top temperature of the highest peak of peaks on the DSC curve was regarded as the melting peak temperature, and the temperature at the inflection point of a baseline shift indicating a change of specific heat associated with glass transition behaviors was regarded as the glass transition temperature.

(4) Texture sensory evaluation

A texture sensory evaluation of a film was carried out by 5 panelists, and the film was judged as follows according to the number of panelists who evaluated the film as having a Japanese-style texture, exhibiting a glittering gloss and a lacy transparency, and having a Japanese-modem texture as a whole.

Evaluation criteria

> Rank A: 3 or more panelists evaluated as having the above texture
> Rank B: 1 to 2 panelists evaluated as having the above texture
> Rank C: 0 panelists evaluated as having the above texture

(5) Visual evaluation

A film was observed with the naked eye and a magnifying glass at 10-fold magnification.

As a result of observation, the visual evaluation result was 1 in the case of "a film having irregularities and an uneven thickness as a whole because there were through-holes in some places, there were portions around the through-holes where resins densely gathered and bulged, these portions appeared like entangled fibers in a Japanese paper, and even the portions that appeared fibrous had portions appearing as if fibers gathered into bundles or were densely entangled, and portions not appearing so", and the visual evaluation result was 2 in the case where "neither a pattern appearing like entangled fibers in a Japanese paper nor a dense and sparse contrast of fibers was observed".

(6) Thickness

The thickness of a foamed sheet was measured using a linear gauge D-100S (measurement pressure 3.5 mN, gauge head diameter 5 mm) manufactured by Ozaki Mfg. Co., Ltd., and was a numerical value obtained by taking an average of measurement results at 9 points, namely 3 points lengthwise x 3 points widthwise, at roughly equal intervals within a randomly selected portion having a length of 50 mm and a width of 50 mm of each sheet.

The thickness of a film was measured using a linear gauge D-100S (measurement pressure 3.5 mN, gauge head diameter 5 mm) manufactured by Ozaki Mfg. Co., Ltd., and was a numerical value obtained by taking an average of measurement results at 9 points, namely 3 points lengthwise $\times$ 3 points widthwise, at roughly equal intervals within a randomly selected portion having a length of 50 mm and a width of 50 mm of each film. When measuring the thickness of a film that was given 1 in the visual evaluation of the previous section, the measurement range included a portion that appeared fibrous.

(7) Bulk density

As for the bulk density of a foamed sheet, the weight of a sheet having a length of 50 mm and a width of 50 mm was measured, and the bulk density was calculated as the density of a cuboid having the thickness measured in the previous section.

As for the bulk density of a stretched film, the weight of a film having a length of 50 mm and a width of 50 mm was measured, and the bulk density was calculated as the density of a cuboid having the thickness measured in the previous section.

(8) Expansion ratio

The expansion ratio of a foamed sheet was determined as a value obtained by dividing the density of resins contained in the foamed sheet by the bulk density of the foamed sheet measured in the previous section. The "density of resins contained in the foamed sheet" is a weight-average value calculated from the density of each resin contained in the foamed sheet and the content of each resin. Note that the resin contained in a foaming agent masterbatch is contained only in a small amount relative to the total amount of resins contained in the foamed sheet and is therefore not taken into consideration when calculating the "density of resins contained in the foamed sheet".

[Example 1]

A pellet blend of 50 parts by weight of the following propylene resin A (melting peak temperature 132°C), 48 parts by weight of the following styrene resin (glass transition temperature 100°C), and 2 parts by weight of the following foaming agent masterbatch was melt-kneaded with the extruder of a sheet molding machine (adjustable single screw extruder VS-40 and sheet processor VFC40-252) manufactured by Tanabe Plastics Machinery Co., Ltd., the melt-kneaded resin composition was extruded from a T die and foamed, and a foamed sheet was thus molded. During the foamed sheet molding, the screw rotational speed of the extruder was 50 rpm, the extruder temperature was 215°C, and the line speed was 1.0 m/min. The resulting foamed sheet had a thickness of 1.1 mm, a bulk density of 0.59 g/cm$^3$, and an expansion ratio of 1.5.

Propylene Resin A: Noblen S131 manufactured by Sumitomo Chemical Co., Ltd. [melt mass flow rate (230°C, 2.16 kg): 2 g/10 min, density: 0.890 g/cm$^3$]
Styrene Resin: Toyo Styrol HI H650 manufactured by Toyo Styrene Co., Ltd. [melt mass flow rate (190°C, 2.16 kg): 3.4 g/10 min, density: 0.870 g/cm$^3$]
Foaming Agent Masterbatch: Cellmic MB3274 manufactured by Sankyo Kasei Co., Ltd. [foaming agents: sodium hydrogencarbonate and citric acid (foaming agent content in foaming agent masterbatch: 40% by weight), resin: low density polyethylene (resin content in foaming agent masterbatch: 60% by weight)]

Next, the resulting foamed sheet was stretched with a biaxial-stretching tester (manufactured by Toyo Seiki Seisaku-sho Ltd.) under conditions having a stretching temperature of 130°C, a longitudinal stretch ratio of 4, and a transverse stretch ratio of 4 (the longitudinal stretch ratio/the transverse stretch ratio = 1), and thus a porous film was obtained. The resulting film had a thickness of 99 μm, an area ratio of through-holes of 8.7%, an Ra of 1.29 μm, an Rmax of 89.77 μm, and a bulk density of 0.21 g/cm$^3$. The visual evaluation result of the resulting film was 1. The result of the texture sensory test of the film was rank A.

[Example 2]

A porous film was obtained in the same manner as Example 1 except that 70 parts by weight of the propylene resin A and 28 parts by weight of a styrene resin were used in foamed sheet molding. The resulting foamed sheet had a thickness of 1.0 mm, a bulk density of 0.64 g/cm$^3$, and an expansion ratio of 1.4. The resulting film had a thickness of 102 μm, an area ratio of through-holes of 12.6%, an Ra of 0.50 μm, an Rmax of 14.75 μm, and a bulk density of 0.19 g/cm$^3$. The visual evaluation result of the resulting film was 1. The result of the texture sensory test of the film was rank A.

[Example 3]

A pellet blend of 70 parts by weight of the following propylene resin A (melting peak temperature 132°C), 28 parts by weight of the following ethylene resin A (melting peak temperature 115°C), and 2 parts by weight of the following foaming agent masterbatch was melt-kneaded with the extruder of a sheet molding machine (adjustable single screw VS-40 and sheet processor VFC40-252) manufactured by Tanabe Plastics Machinery Co., Ltd., the melt-kneaded resin composition was extruded from a T die and foamed, and a foamed sheet was thus molded. During the foamed sheet molding, the screw rotational speed of the extruder was 50 rpm, the extruder temperature was 215°C, and the line speed was 0.5 m/min. The resulting foamed sheet had a thickness of 0.8 mm, a bulk density of 0.48 g/cm$^3$, and an expansion ratio of 1.9.

Propylene Resin A: Noblen S131 manufactured by Sumitomo Chemical Co., Ltd. [melt mass flow rate (230°C, 2.16 kg): 2 g/10 min, density: 0.890 g/cm$^3$]
Ethylene Resin A: Excellen VL-100 manufactured by Sumitomo Chemical Co., Ltd. [melt mass flow rate (190°C, 2.16 kg): 0.8 g/10 min, density: 0.900 g/cm$^3$]
Foaming Agent Masterbatch: Cellmic MB3274 manufactured by Sankyo Kasei Co., Ltd. [foaming agents: sodium hydrogencarbonate and citric acid (foaming agent content in foaming agent masterbatch: 40% by weight), resin: low density polyethylene (resin content in foaming agent masterbatch: 60% by weight)]

Next, the resulting foamed sheet was stretched with a biaxial-stretching tester (manufactured by Toyo Seiki Seisaku-sho Ltd.) under conditions having a stretching temperature of 130°C, a longitudinal stretch ratio of 4, and a transverse stretch ratio of 4 (the longitudinal stretch ratio/the transverse stretch ratio = 1), and thus a porous film was obtained. The resulting film had a thickness of 243 μm, an area ratio of through-holes of 5.1%, an Ra of 1.46 μm, an Rmax of 48.58 μm, and a bulk density of 0.22 g/cm$^3$. The visual evaluation result of the resulting film was 1. The result of the texture sensory test of the film was rank A.

[Example 4]

A porous film was obtained in the same manner as Example 3 except that the screw rotational speed of the extruder was 30 rpm, and the line speed was 1.0 m/min, in foamed sheet molding. The resulting foamed sheet had a thickness of 0.9 mm, a bulk density of 0.38 g/cm$^3$, and an expansion ratio of 2.4. The resulting film had a thickness of 105 $\mu$m, an area ratio of through-holes of 6.1%, an Ra of 2.17 $\mu$m, an Rmax of 125.59 $\mu$m, and a bulk density of 0.16 g/cm$^3$. The visual evaluation result of the resulting film was 1. The result of the texture sensory test of the film was rank A.

[Comparative Example 1]

A film was obtained in the same manner as Example 3 except that the screw rotational speed of the extruder was 80 rpm in foamed sheet molding. The resulting foamed sheet had a thickness of 1.1 mm, a bulk density of 0.68 g/cm$^3$, and an expansion ratio of 1.3. The resulting film had a thickness of 155 $\mu$m, an area ratio of through-holes of 0%, an Ra of 0.65 $\mu$m, an Rmax of 16.27 $\mu$m, and a bulk density of 0.37 g/cm$^3$. The resulting film did not have through-holes, and the visual evaluation result was 2. The result of the texture sensory test of the film was rank C.

[Comparative Example 2]

A pellet blend of 70 parts by weight of the following propylene resin A (melting peak temperature 132°C), 28.5 parts by weight of the following ethylene resin A (melting peak temperature 115°C), and 1.5 parts by weight of the following foaming agent masterbatch was melt-kneaded with the extruder of a sheet molding machine (adjustable single screw VS-40 and sheet processor VFC40-252) manufactured by Tanabe Plastics Machinery Co., Ltd., the melt-kneaded resin composition was extruded from a T die and foamed, and a foamed sheet was thus molded. During the foamed sheet molding, the screw rotational speed of the extruder was 65 rpm, the extruder temperature was 215°C, and the line speed was 0.8 m/min. The resulting foamed sheet had a thickness of 1.4 mm, a bulk density of 0.70 g/cm$^3$, and an expansion ratio of 1.3.

Propylene Resin A: Noblen S131 manufactured by Sumitomo Chemical Co., Ltd. [melt mass flow rate (230°C, 2.16 kg): 2 g/10 min, density: 0.890 g/cm$^3$]
Ethylene Resin A: Excellen VL-100 manufactured by Sumitomo Chemical Co., Ltd. [melt mass flow rate (190°C, 2.16 kg): 0.8 g/10 min, density: 0.900 g/cm$^3$]
Foaming Agent Masterbatch: Cellmic MB3274 manufactured by Sankyo Kasei Co., Ltd. [foaming agents: sodium hydrogencarbonate and citric acid (foaming agent content in foaming agent masterbatch: 40% by weight), resin: low density polyethylene (resin content in foaming agent masterbatch: 60% by weight)]

Next, the resulting foamed sheet was stretched with a biaxial-stretching tester (manufactured by Toyo Seiki Seisaku-sho Ltd.) under conditions having a stretching temperature of 130°C, a longitudinal stretch ratio of 2, and a transverse stretch ratio of 2 (the longitudinal stretch ratio/the transverse stretch ratio = 1), and thus a porous film was obtained. The resulting film had a thickness of 648 $\mu$m, an area ratio of through-holes of 0.1%, an Ra of 1.45 $\mu$m, an Rmax of 46.33 $\mu$m, and a bulk density of 0.24 g/cm$^3$. The visual evaluation result of the resulting film was 2. The result of the texture sensory test of the film was rank C.

[Example 5]

A porous film was obtained in the same manner as Comparative Example 2 except that the stretch ratios included a longitudinal stretch ratio of 3 and a transverse stretch ratio of 3 (the longitudinal stretch ratio/the transverse stretch ratio = 1) in the stretching. The resulting film had a thickness of 235 $\mu$m, an area ratio of through-holes of 3.4%, an Ra of 1.19 $\mu$m, an Rmax of 42.50 $\mu$m, and a bulk density of 0.31 g/cm$^3$. The visual evaluation result of the resulting film was 1. The result of the texture sensory test of the film was rank A.

[Example 6]

A porous film was obtained in the same manner as Comparative Example 2 except that the stretch ratios included a longitudinal stretch ratio of 5 and a transverse stretch ratio of 5 (the longitudinal stretch ratio/the transverse stretch ratio = 1) in the stretching. The resulting film had a thickness of 79 $\mu$m, an area ratio of through-holes of 4.4%, an Ra of 0.96 $\mu$m, an Rmax of 19.42 $\mu$m, and a bulk density of 0.33 g/cm$^3$. The visual evaluation result of the resulting film was 1. The result of the texture sensory test of the film was rank A.

[Example 7]

A porous film was obtained in the same manner as Comparative Example 2 except that the stretch ratios included a longitudinal stretch ratio of 6 and a transverse stretch ratio of 6 (the longitudinal stretch ratio/the transverse stretch ratio = 1) in the stretching. The resulting film had a thickness of 52 $\mu$m, an area ratio of through-holes of 12.7%, an Ra of 0.56 $\mu$m, an Rmax of 13.97 $\mu$m, and a bulk density of 0.24 g/cm$^3$. The visual evaluation result of the resulting film was 1. The result of the texture sensory test of the film was rank A.

[Table 1]

| | Rmax/(Ra+1) | Area ratio of through-holes (%) | Bulk density of film (g/cm$^3$) | Texture sensory evaluation |
|---|---|---|---|---|
| Example 1 | 39.2 | 8.7 | 0.21 | Rank A |
| Example 2 | 9.8 | 12.6 | 0.19 | Rank A |
| Example 3 | 19.7 | 5.1 | 0.22 | Rank A |
| Example 4 | 39.6 | 6.1 | 0.16 | Rank A |
| Comparative Example 1 | 9.9 | 0.0 | 0.37 | Rank C |

[Table 2]

| | Rmax/(Ra+1) | Area ratio of through-holes (%) | Bulk density of film (g/cm$^3$) | Texture sensory evaluation |
|---|---|---|---|---|
| Comparative Example 2 | 18.9 | 0.1 | 0.24 | Rank C |
| Example 5 | 19.4 | 3.4 | 0.31 | Rank A |
| Example 6 | 9.9 | 4.4 | 0.33 | Rank A |
| Example 7 | 9.0 | 12.7 | 0.24 | Rank A |

**Claims**

1. A molded article formed of a thermoplastic resin composition, wherein
a maximum height (Rmax) of surface roughness of the molded article measured in accordance with JIS B 0601-1982 and a centerline average roughness (Ra) of a surface of the molded article measured in accordance with JIS B 0601-1982 satisfy the following formula (1):

$$9 \leq \text{Rmax}/(\text{Ra} + 1) \leq 45 \qquad \text{Formula (1)},$$

an area ratio of through-holes of the molded article is 1% or more and 20% or less, with a surface area of the molded article being 100%, and
a bulk density of the molded article is 0.13 g/cm$^3$ or more and 0.50 g/cm$^3$ or less.

2. The molded article according to claim 1, wherein the thermoplastic resin composition comprises two immiscible thermoplastic resins, and the total amount of the two immiscible thermoplastic resins is 90% by weight or more, with the overall amount of all thermoplastic resins in the thermoplastic resin composition being 100% by weight.

3. The molded article according to claim 2, wherein the two immiscible thermoplastic resins are two immiscible thermoplastic resins differing in transition temperature.

4. The molded article according to claim 3, wherein
of the two immiscible thermoplastic resins differing in transition temperature, a first thermoplastic resin (A) being the resin with a higher transition temperature and a second thermoplastic resin (B) being the resin with a lower transition temperature have a difference in transition temperature of 10°C or more and 50°C or less, and the content of the first thermoplastic resin (A) is 30% by weight or more and 90% by weight or less and the content of the second thermoplastic resin (B) is 10% by weight or more and 70% by weight or less, with the total amount of the first thermoplastic resin (A) and the second thermoplastic resin (B) being 100% by weight.

5. The molded article according to any one of claims 1 to 4, the molded article being a film having a thickness of 10 $\mu$m or more and 1000 $\mu$m or less.

6. A laminate having a layer formed of the molded article according to any one of claims 1 to 5 as at least one surface layer.

7. A method for producing the molded article according to any one of claims 1 to 5, comprising:

a foamed sheet preparation step of melt-extruding a thermoplastic resin composition comprising a foaming agent to prepare a foamed sheet; and
a stretching step of biaxially stretching the foamed sheet obtained in the foamed sheet preparation step.

**EP 3 225 653 A1**

# INTERNATIONAL SEARCH REPORT

| International application No. |
| --- |
| PCT/JP2015/083207 |

**A. CLASSIFICATION OF SUBJECT MATTER**
*C08J9/06*(2006.01)i, *B29C47/00*(2006.01)i, *B32B5/18*(2006.01)i, *C08L101/00* (2006.01)i, *B29K105/04*(2006.01)n, *B29L7/00*(2006.01)n

According to International Patent Classification (IPC) or to both national classification and IPC

**B. FIELDS SEARCHED**

Minimum documentation searched (classification system followed by classification symbols)
C08J9/06, B29C47/00, B32B5/18, C08L101/00, B29K105/04, B29L7/00

Documentation searched other than minimum documentation to the extent that such documents are included in the fields searched
Jitsuyo Shinan Koho       1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 56-162639 A  (Sumitomo Bakelite Co., Ltd.), 14 December 1981 (14.12.1981), (Family: none) | 1-7 |
| A | JP 3-231936 A  (Mitsui Toatsu Chemicals, Inc.), 15 October 1991 (15.10.1991), (Family: none) | 1-7 |
| P,A | JP 2015-123318 A  (Nissei Chemical Co., Ltd.), 06 July 2015 (06.07.2015), (Family: none) | 1-7 |

| ☐ Further documents are listed in the continuation of Box C. | ☐ See patent family annex. |
| --- | --- |

\*  Special categories of cited documents:
"A"  document defining the general state of the art which is not considered   to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
| --- | --- |
| 20 January 2016 (20.01.16) | 02 February 2016 (02.02.16) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003025514 A
- JP 2002524299 A
- JP 2007231192 A
- JP H9235403 B